# EUROPEAN PATENT SPECIFICATION

(11) **EP 3 647 727 B1**
(45) Date of publication and mention of the grant of the patent: **07.07.2021**
(21) Application number: 19205571.3
(22) Date of filing: 28.10.2019
(51) Int. Cl.: G01C 21/20, G01C 21/32, G08G 5/00, B63B 49/00

(54) **SYSTEMS AND ASSOCIATED METHODS FOR GENERATING NAVIGATION CHARTS AND NAVIGABLE ROUTES IN AN OPEN ENVIRONMENT**
SYSTEME UND ZUGEHÖRIGE VERFAHREN ZUR ERZEUGUNG VON NAVIGATIONSKARTEN UND NAVIGIERBAREN ROUTEN IN EINER OFFENEN UMGEBUNG
SYSTÈMES ET PROCÉDÉS ASSOCIÉS POUR GÉNÉRER DES CARTES DE NAVIGATION ET DES ITINÉRAIRES NAVIGABLES DANS UN ENVIRONNEMENT OUVERT

(30) Priority: 30.10.2018 US 201816175247
(43) Date of publication of application: 06.05.2020
(60) Divisional application: 21175074.0
(73) Proprietor: Navico Holding AS, 4370 Egersund (NO)
(72) Inventor: FALLRO, Kristian, 0462 Oslo (NO); BOROVAC, Amir, 10179 Berlin (DE); SEVILLANO, Jorge, 10435 Berlin (DE)
(74) Representative: Hewett, Jonathan Michael Richard

(56) References cited:
- KR-B1- 101 799 216
- US-A1- 2001 023 390
- US-A1- 2008 306 680
- SOUISSI OMAR ET AL: "Path planning: A 2013 survey", PROCEEDINGS OF 2013 INTERNATIONAL CONFERENCE ON INDUSTRIAL ENGINEERING AND SYSTEMS MANAGEMENT (IESM), INTERNATIONAL INSTITUTE FOR INNOVATION, INDUSTRIAL ENGINEERING AND ENTREPRENEURSHIP - I4E2, 28 October 2013 (2013-10-28), pages 1-8, XP032578107, [retrieved on 2014-03-07]

## Description

### FIELD OF THE INVENTION

Embodiments of the present invention relate generally to navigation systems and, more particularly, to navigation systems, assemblies, and associated methods for generating navigation charts and navigable routes in an open environment.

### BACKGROUND OF THE INVENTION

Navigation systems that operate in an open environment, such as marine navigation systems, may provide a display of a navigation chart or map. In some cases, routes may be manually entered into the navigation system by a user, such as for display in association with the chart. The route may be followed by manual maneuvering of the vehicle or by an autopilot system controlling the vehicle (e.g., marine vehicle, airplane, automobile, drone, vessel, etc.) along the route. In some instances, the navigation systems may also provide a location of the vehicle.

Some navigation systems may include an automated route generation capability. However, in an open environment, especially a large open environment (such as an ocean, sea, sky, space, etc.), generation of a route may be extremely complicated. Document KR 101799216 B1 discloses the construction of a chart for nautical navigation by applying a non-uniform grid to the chart from the database and removing nodes that are on or near land.

### BRIEF SUMMARY OF THE INVENTION

In contrast to a defined path environment, such as roads and trails with defined intersections, an open environment does not include defined travel paths or intersections and a vehicle may be able to travel anywhere with the exception of barrier locations, such as land, shipping lanes, shallow depths, or the like. In such an example, it may require significant time or computational power to generate the route, and/or may be prohibitive to calculate. For example, some open environment automated routing systems may split an open environment into a plurality of grid areas. The automated routing system may then generate a route across each grid area, avoiding any barriers within each grid area to get from a start location to an end location.

Typically generating a route in an open environment navigation system, such as by using a grid area approach, can take a significant amount of time, such as five or more minutes, and can consume a significant amount of computing power. As more consumers use automatic routing navigation systems, there is an increase in the computational power required to generate the additional routes. Additionally, consumers may become frustrated waiting for routes to be generated after several minutes.

In some embodiments of the present invention, a navigation chart may be generated that includes a series of navigation nodes and potential (e.g., predetermined) route segments (PRSs) between navigation nodes. In such an embodiment, the navigation system may be able to quickly determine a route using the PRSs from a start location to an end location. In some embodiments, the navigation system may be able to optimize, e.g. simplify, the route, such as by removing "zig-zags" or overshoots or accounting for other factors (e.g., preferences, depth, etc.) due to PRSs that are not in an ideal path between the start location and end location.

In an example embodiment, the navigation chart may include one or more barriers and a first plurality of navigation nodes may be disposed at a first distance from the barriers. A plurality of second navigation nodes may be disposed within a first threshold distance range, wherein the first threshold distance range includes a minimum distance that is greater than the first predetermined distance from the barrier beyond the first navigation nodes. As distance increases from the barriers, the navigation chart may also include additional pluralities, e.g. groups or tiers, of navigation nodes of increasing distances and threshold distance ranges (e.g., the nodes may become less dense the further away from the barriers they are).

The navigation chart may include potential route segments (PRSs) disposed between the navigation nodes. The navigation nodes proximate to the barriers and the navigation nodes of the second plurality of navigation nodes proximate the first navigation nodes may be connected by PRSs where there is a clear line of sight between the navigation nodes. In some embodiments, there may be PRSs between other navigation nodes in the plurality of navigation nodes up to a predetermined distance or predetermined number of PRSs for a navigation node (e.g., PRSs may connect two navigation nodes that are not the closest to each other, but are within a certain distance of each other).

The navigation system may receive a start location and an end location, such as based on a user input and/or a current location, and retrieve a navigation chart (or a portion thereof) including both the start and end location. The navigation system may then determine a route from the start location to the end location along the PRSs of the navigation chart. The route may be determined locally, such as on a navigation device or may be calculated by a server receiving the start and end location from the navigation device. In an instance in which a start and/or an end location is not along a PRS, the navigation system may also determine a route segment from the start or end location to a proximate PRS, such as the nearest available PRS. In an example in which the route was calculated at a remote server, the route may be transmitted to the navigation device, such as a marine electronics device for display for an operator to follow. Additionally or alternatively, the navigation device may utilize the route information with an autopilot, such as to generate one or more control signals to transmit to an autopilot to cause the autopilot to automatically follow the route by controlling a maneuvering system.

In some instances, the route may include one or more zig-zags or overshoots, such as due to a lack of a direct path between navigation nodes or PRSs that do not follow a straight path (e.g., because the PRSs were used instead to save time and computing processing power or various other reasons such as preferences). The navigation system may be configured to optimize, or smooth, portions of the route to limit or eliminate some or all of the zig-zags or overshoots, comply with preferences, reduce route length, and/or reduce route time. In an example embodiment, the navigation system may determine one or more optimized route segments of the initial route generated between the start location and the end location. The optimized route segments may be a more preferred path (e.g., a straight line, a line based on preferences, etc.) between the two nodes or may be segments with a more preferred path between the two nodes. The navigation system may replace one or more of the route segments of the route with the optimized route segments to create a more preferred route between the start location and the end location. In some embodiments, determining how to optimize a portion of the route may be based on the distance from a barrier. Since the navigation node groups are at least the predetermined distance from a barrier, the navigation system can modify, or optimize, one or more route segments up to the predetermined distance without additional computation or safety concerns (e.g., the optimization process may be automatically accounting for the barriers).

In some embodiments, additional parameters may be used to determine which PRSs are selected for the route. In some instances a user may identify one or more parameters to remain close to, such as a depth band, distance from shore, commonly used paths, or the like, or to avoid, such as weather, shallow or deep depths, commonly used paths, shipping lanes, or the like. The navigation system may apply weights to the navigation nodes and/or PRSs based on one or more parameters and determine a route based on the nodes that have the highest compliance weight.

In some example embodiments, the navigation chart may be a three dimensional chart and the route may be generated in three dimensions. For example, the navigation chart may include a nautical chart for submerged water operations, an aeronautical or aerospace chart for fight operations, or the like.

An example embodiment of the present invention includes a method of generating a chart for navigation through an open environment. The method includes retrieving a navigation chart from a navigation database, determining one or more barriers in the navigation chart, generating a plurality of first navigation nodes at a first predetermined distance from the one or more barriers, and generating a plurality of second navigation nodes disposed within a first threshold distance range. The first threshold distance range includes a minimum distance from the one or more barriers that is greater than the first predetermined distance. The method also includes generating a first plurality of potential route segments (PRSs), where each of the first plurality of PRSs extend between two first navigation nodes or between a first navigation node and a second navigation node that are within a first proximity distance of each other, and generating a second plurality of PRSs that each extend between two second navigation nodes that are within a second proximity distance of each other.

In some example embodiments, the method also includes generating a plurality of barrier nodes disposed a predetermined safety distance from the one or more barriers and one or more barrier segments that each extend between two barrier nodes. The one or more barrier segments define the one or more barriers for generation of the first navigation nodes and second navigation nodes.

In some example embodiments, the method also includes generating a plurality of third navigation nodes disposed within a second threshold distance range. The second threshold distance range includes a minimum distance from the one or more barriers that is greater than or equal to a maximum distance from the one or more barriers of the first threshold range. The method further including generating a third plurality of PRSs that each extend between two third navigation nodes or between a second navigation node and a third navigation node that are within a third proximity distance of each other.

In some example embodiments, the method also includes associating parameter data with at least one of the plurality of first navigation nodes, at least one of the plurality of second navigation nodes, at least one of the first plurality of PRSs, or at least one of the second plurality of PRSs.

In another example embodiment, a navigation system is provided including a navigation device including a user interface, a device processor and a device memory including computer program code. The computer program code is configured to, with the device processor, cause the navigation device to receive an indication of a start location and an end location based on user input applied to the user interface of the navigation device, and receive at least a portion of a navigation chart from a navigation database that includes both the start location and the end location. The navigation chart includes one or more barriers, a plurality of first navigation nodes disposed at a first predetermined distance from the one or more barriers, and a plurality of second navigation nodes disposed within a first threshold distance range. The first threshold distance range includes a minimum distance from the one or more barriers that is greater than the first predetermined distance. The navigation chart also includes a first plurality of potential route segments (PRSs) that each extend between two first navigation nodes or between a first navigation node and a second navigation node that are within a first proximity distance of each other and a second plurality of PRSs that each extend between two second navigation nodes that are within a second proximity distance of each other. The computer program code is further configured to cause the navigation device to determine an initial route between the start location and the end location that includes at least one of the first plurality of PRSs or at least one of the second plurality of PRSs and generate a navigable route by optimizing at least a portion of the initial route between the start location and the end location. Optimizing at least a portion of the initial route comprises replacing a portion of the initial route corresponding to at least a portion of one of the first plurality of PRSs or one of the second plurality of PRSs with a different route portion. The computer program product is further configured to cause the navigation device to cause the generated navigable route to be displayed on the user interface.

In an example embodiment, the computer program code is further configured to, with the device processor, cause the navigation device to weight the plurality of first navigation nodes, the plurality of second navigation nodes, the first plurality of PRSs, or the second plurality of PRSs based on one or more parameters and determine the initial route based on the one or more parameters such that the initial route includes first navigation nodes, second navigation nodes, or PRSs with parameters that satisfy a desired compliance weight. In some example embodiments, the parameters are based on at least one of depth, distance from a barrier, distance from a weather parameter, how often that node or PRS is used, or distance from a traffic lane.

In some example embodiments, the navigation chart also includes a plurality of third navigation nodes disposed within a second threshold distance range including a minimum distance from the one or more barriers that is greater than a maximum distance from the one or more barriers of the first threshold distance range and a third plurality of PRSs that each extend between two third navigation nodes or between a second navigation node and a third navigation node that are within a third proximity distance of each other. In some embodiments, determining the initial route includes determining the initial route to include at least one of the first plurality of PRSs, at least one of the second plurality of PRSs, or at least one of the third plurality of PRSs.

In some example embodiments, optimizing the at least a portion of the initial route includes straightening a portion of the initial route that extends across two or more consecutive PRSs from either the first plurality of PRSs or the second plurality of PRSs.

In some example embodiments, the navigation chart includes a three dimensional navigation chart and the navigable route is generated in three dimensions.

In some example embodiments, the navigation chart is a nautical chart or an aerospace chart.

In some example embodiments, the first plurality of PRSs includes route segments with a clear line of sight between consecutive ones of the plurality of first navigation nodes.

Additional example embodiments of the present invention include apparatuses, methods, systems, and computer program products associated with various embodiments described herein, including, for example, the above described device embodiments.

### BRIEF DESCRIPTION OF THE DRAWINGS

Having thus described the invention in general terms, reference will now be made to the accompanying drawings, which are not necessarily drawn to scale, and wherein:
FIG. 1 illustrates an example navigation chart with illustrated barriers, navigation nodes, and potential route segments, in accordance with some embodiments discussed herein;
FIGs. 2A-2E illustrate an example route generation between a start location and an end location, in accordance with some embodiments discussed herein;
FIGs. 3A-3C illustrate example route optimization in accordance with some embodiments discussed herein;
FIG. 4 illustrates a block diagram illustrating an example navigation system in accordance with some embodiments discussed herein;
FIG. 5 shows a block diagram illustrating an example marine electronics device in accordance with some embodiments discussed herein;
FIGs. 6-8 illustrate flowcharts of example methods of generating a route in accordance with some embodiments discussed herein;
FIG. 9 illustrates a flowchart of an example method of generating a navigation chart in accordance with some embodiments discussed herein; and
FIG. 10 illustrates an example nautical chart including navigation nodes and potential route segments in accordance with some embodiments discussed herein.

### DETAILED DESCRIPTION

Exemplary embodiments of the present invention now will be described more fully hereinafter with reference to the accompanying drawings, in which some, but not all embodiments of the invention are shown. Indeed, the invention may be embodied in many different forms and should not be construed as limited to the exemplary embodiments set forth herein; rather, these embodiments are provided so that this disclosure will satisfy applicable legal requirements. Like reference numerals refer to like elements throughout.

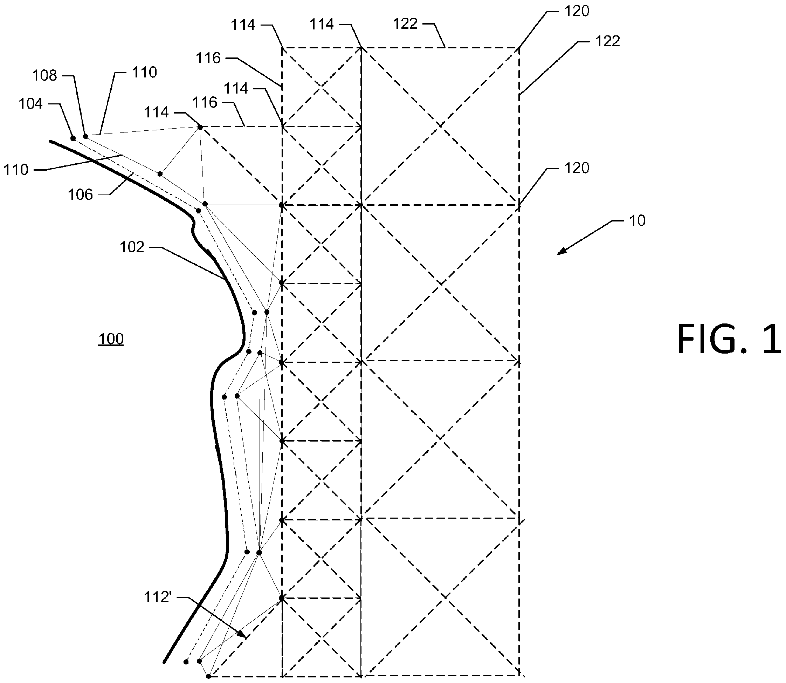

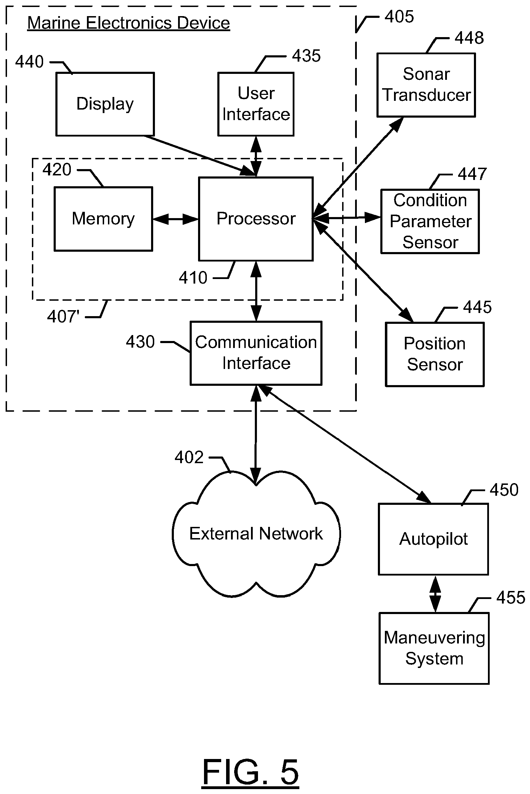

Electronic navigation charts may be used to indicate topology, depth, borders, obstacles, or the like for land, air, space, or marine navigation. FIG. 1 illustrates an example marine navigation chart 10 according to some example embodiments of the present invention. In some example embodiments, a marine electronics device 405, such as described below in reference to FIG. 5, may display the chart 10 for location and/or navigation purposes (e.g., maneuvering a vehicle or watercraft, such as a boat or ship). In an example embodiment, the marine electronics device 405 may alternatively or additionally, display a chart segment. The chart segment may include a portion of the navigation chart 10. The chart segment may be rendered or displayed in a larger scale than the navigation chart 10 and may also include additional details. For example, the navigation chart 10 may have a scale of 1 NM/cm and display a depth line of 25 ft. In contrast, the chart segment may have a scale of 0.3 NM/cm and include depth contour lines with a 1 ft. depth change, 5 ft. depth change, or the like.

In an example embodiment, additional navigation data may be generated and stored as a portion of the navigation chart 10 to enable route generation in an open environment. The navigation chart 10 may include one or more barriers 100 to travel, for example in the marine environment, barriers may include land, shallow depths, submerged objects, or the like. Notably, as described herein, some embodiments of the present invention contemplate use in non-marine based environments, such as air, land, and space (as well as underwater). In such other environments, other example barriers are contemplated, such as towers, mountains, rivers, planets, asteroids, etc.

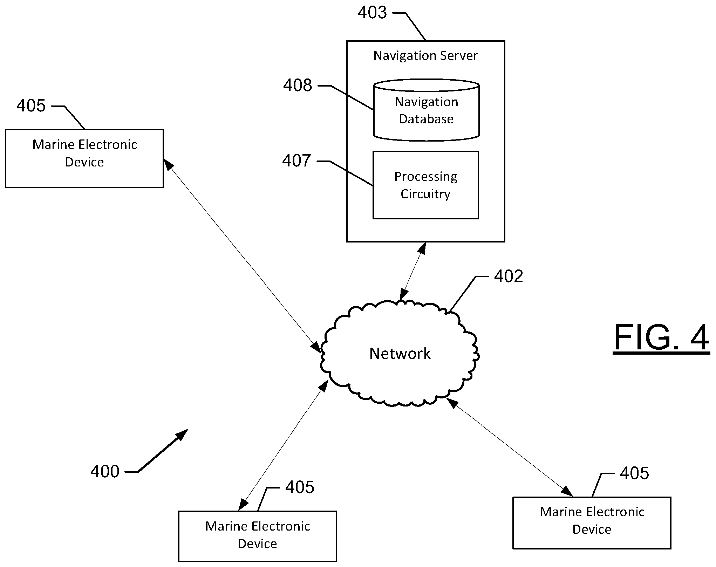

A computing device, such as a navigation server 403, discussed below in reference to FIG. 4, may identify one or more barriers 100 in the navigation chart 10. The navigation server 403 may then identify a barrier edge 102 of one or more of the barriers 100 identified in the navigation chart 10. For example, the navigation server 403 may identify a barrier edge 102 by identifying a shore line of a land barrier, a depth contour line associated with a minimum depth, or a perimeter of a submerged object.

In some example embodiments, the navigation server 403 may generate a plurality of barrier nodes 104 a predetermined safety distance from the barrier edge 102. The predetermined safety distance may be manually set by a user or automatically determined, such as based on the size or draft of a watercraft. For example, the predetermined safety distance may be 5 ft., 10 ft., 50 ft., or any other suitable distance. The navigation server 403 may then generate one or more barrier segments 106 disposed between the barrier nodes. The barrier segments 106 may include straight line segments between two adjacent barrier nodes, such as within a line of sight.

The navigation server 403 may generate a plurality of first navigation nodes 108 at a predetermined distance from the one or more barriers 100. For the purpose of generating navigation nodes, the barrier 100 may be defined by the barrier edge 102, or in an example in which one or more barrier segments 106 were generated, the barrier segments 106. The first predetermined distance may be manually set by a user or automatically determined, such as based on the size or draft of a watercraft. For example, the first predetermined distance may be 5 ft., 10 ft., 50 ft., or any other suitable distance.

The navigation server 403 may then generate one or more first potential route segments (PRSs) 110 that may be straight line paths between two first navigation nodes 108. The first PRSs 110 may connect any two first navigation nodes 108 that have a clear line of sight, e.g. are not obstructed by a barrier segment 106 or the barrier edge 102. In some example embodiments, the first PRSs 110 may have a maximum connection limit, such as three navigation nodes, four navigation nodes, seven navigation nodes, or any other suitable number of nodes. The maximum connection limit may provide a significant number of first PRSs between first navigation nodes without causing excessive computation during navigation chart generation or route generation.

Next, the navigation server 403 may generate a plurality of second navigation nodes 114. The second navigation nodes 114 may be disposed within a first threshold distance range including a minimum distance from the barrier 100 (or barrier segments 106) that is greater than the first predetermined distance. For example, the second plurality of navigation nodes may be disposed in a range of 100 ft. to 400 ft. from a barrier 100. In other words, the second navigational nodes 114 are disposed further away from the barriers 100 than the first navigation nodes 108. The second navigation nodes 114 may be disposed at intervals within the first threshold distance range, such as at increments of 100 ft. (as depicted in FIG. 1). A plurality of second PRSs 116 may be disposed between two second navigation nodes 114 within a predetermined distance of each other, such as 100 ft., 200 ft., or other suitable distance. Additionally or alternatively, each second PRS 116 may have a maximum connection limit, such that second PRSs may extend from the same second navigation node to other navigation nodes that are within the maximum connection limit (e.g., the second PRS may extend to a second navigation node that is not the closest second navigation node). In addition to interconnecting second navigation nodes 114, the second PRSs 116 may be disposed between first navigation nodes 108 and second navigation nodes 114 where the first navigation nodes 108 fall within the predetermined distance and/or the maximum connection limit.

The navigation server 403 may then generate a plurality of third navigation nodes 120. The third navigation nodes 120 may be disposed within a second threshold distance range including a minimum distance from the barrier 100 (or barrier segment) that is greater than the first threshold distance range. For example, the third plurality of nodes may be disposed in a range of 400 ft. to 2000 ft. from a barrier 100. In other words, the third navigation nodes 120 are disposed further away from the barriers 100 than the second navigation nodes 114. The third navigation nodes 120 may be disposed at intervals within the range, such as increments of 250 ft. A plurality of third PRSs 122 may extend between two third navigation nodes 120 within a second predetermined distance of each other, such as 250 ft., 500 ft., or other suitable distance. Additionally or alternatively, each third navigation node 120 may have a maximum connection limit, such that third PRSs are disposed between the closest third navigational nodes 120 (and potentially others). In addition to interconnecting third navigation nodes 120, the third PRSs 122 may be disposed between second navigation nodes 114 and third navigation nodes 120 where the second navigation nodes 114 fall within the second predetermined distance and/or the maximum connection limit.

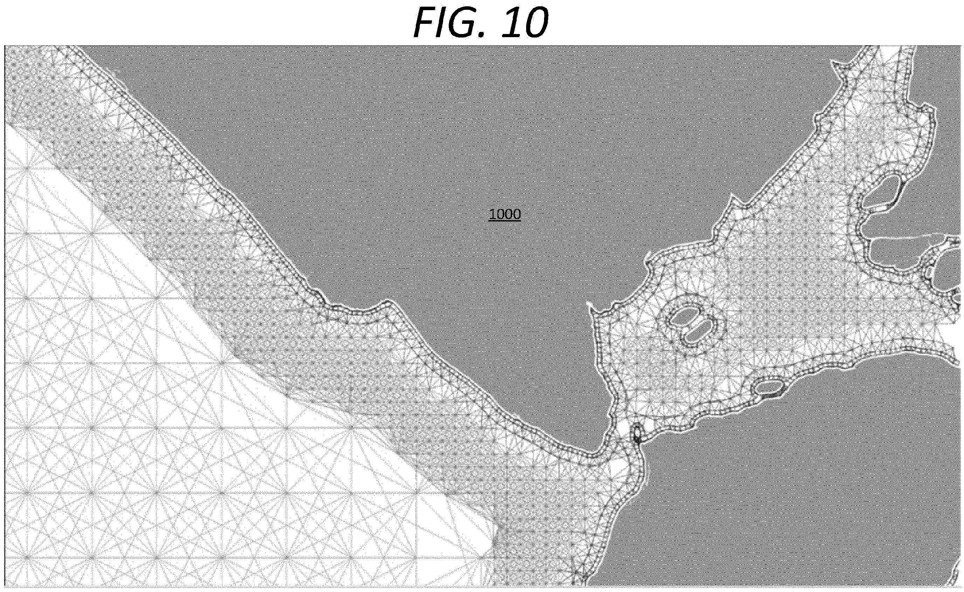

An example navigation chart 1000 is depicted in FIG. 10 including multiple tiers of navigation nodes and associated PRSs. As the distances from barriers increases, the density of the navigation nodes decreases. This enables the areas of the navigation chart further away from a barrier to be calculated quickly, while still enabling more detailed route calculation nearer to barriers where more navigation nodes are disposed. Notably, as shown in FIG. 10, while positioning of the navigation nodes is grid based in FIG. 1, some embodiments of the present invention contemplate different patterned placement of the navigation nodes (e.g., spider web form).

In some example embodiments, the navigation server 403 may associate parameter data with one or more navigation nodes 108, 114, 120 and or PRSs 110,116, 122. Parameter data may include, for example, distance from a barrier 100, depth, distance from traffic lanes (such as shipping lanes), weather data, commonly used paths, or the like. In an example embodiment, weather data or other continuously changing data may be dynamically updated when the navigation chart is retrieved from the navigation database 408 or during other times, such as during updating. In some embodiments, the commonly used paths may be machine learned, such as based on previously generated routes and/or user modifications to previously generated routes. In some embodiments, the commonly used paths may be provided in the chart during creation or through other sources, such as social media.

The navigation chart 10, including the additional navigation data discussed above, may be stored in a navigation database 408 and/or a memory 420 of a marine electronics device 405 and/or a navigation server 403, as discussed in FIGs. 4 and 5. The navigation device 405 and/or the navigation server 403 may access the navigation database 408 and/or memory 420 to retrieve the navigation chart 10 or portion of a navigation chart to generate a route between a start location and an end location, as discussed below. Although the some examples discussed herein are in a context of the generation of the route being performed at the remote server 403, the route may, in some embodiments, be generated locally at the marine electronics device 405, such as in an offline mode, or other independent operation. As such, the steps of transmitting data between the navigation server 403 and the marine electronics device 405, as discussed below may be omitted during local generation of a route.

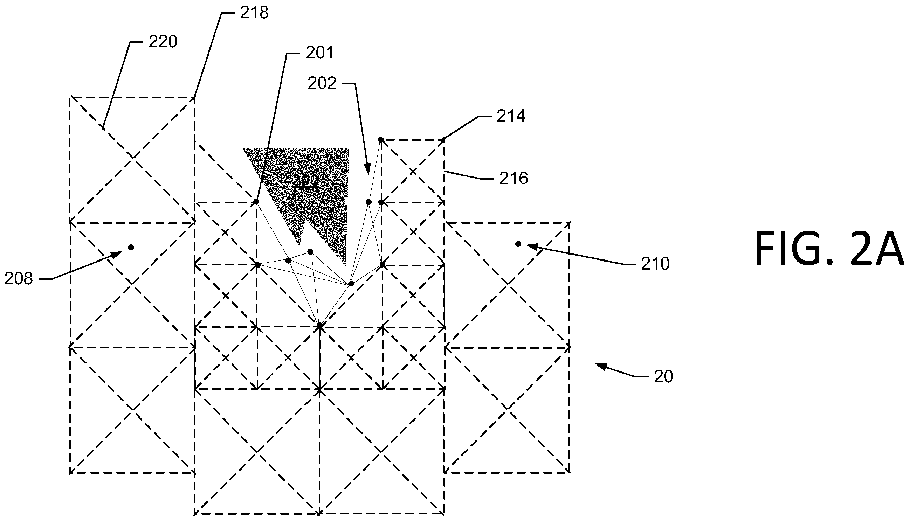

A local navigation chart and/or chart segment may be displayed on a touch screen of a user interface associated with marine electronics device 405. The touch screen may sense a user input defining a start location 208 and/or an end location 210 (shown for example in FIGs. 2A-2E) in reference to the local navigation or chart segment. In some embodiments, the marine electronics device 405 may sense a touch input defining an end location 210 and use a current position for the start location 208. The current position may be determined using a position sensor, such as a global position sensor, and correlating position data from the position sensor to a location on the local navigation chart. The start location and end location may be transmitted to the navigation server 403 (or other computing device acting as a navigation server such as described herein (e.g., a navigation device)).

Turning to FIG. 2A, the navigation system may access the navigation database 408 and retrieve a navigation chart 20, or a portion of a navigation chart 20, that includes both the start location 208 and the end location 210. In an example embodiment in which the generation of the route is performed locally, the marine electronics device 405 may access the memory 420 and retrieve a navigation chart 20, or a portion of a navigation chart 20, that includes both the start location 208 and the end location 210. The navigation chart 20 retrieved from the navigation database 408 may be substantially similar to the navigation chart 10 discussed above in reference to FIG. 1, including having one or more barriers 200, a first plurality of navigation nodes 201, a first plurality of PRSs 202, a second plurality of navigation nodes 214, a second plurality of PRSs 216, a third plurality of navigation nodes 218, and a third plurality of PRSs 220. The navigation system may determine or plot the start location 208 and end location 210 on the navigation chart 20.

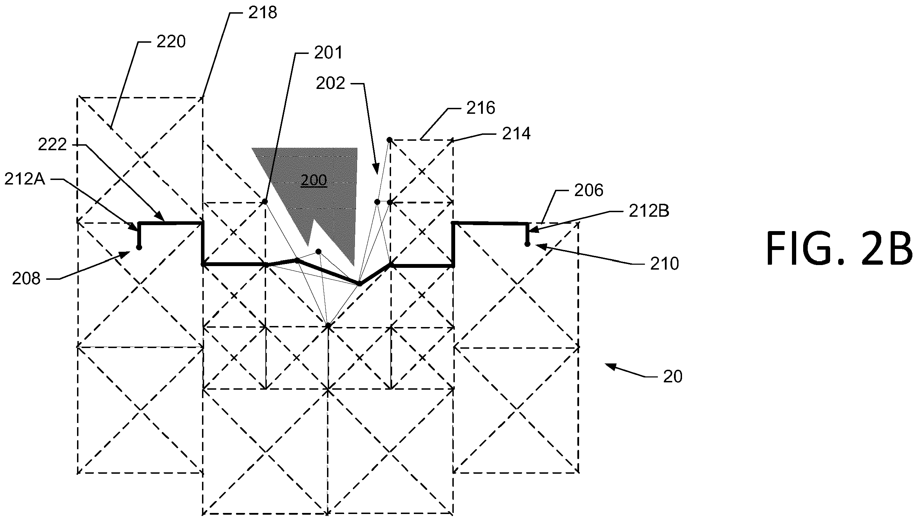

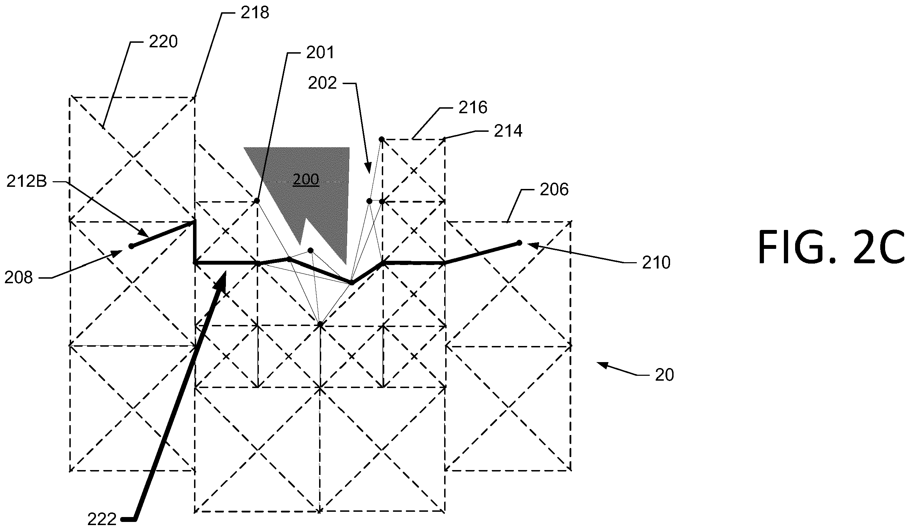

Turning to FIG. 2B, the navigation system may generate a first route segment 212A between the start location and a PRS of the plurality of first PRSs 202, second plurality of PRSs 214, and third plurality of PRSs 218, such as the closest available PRS. Here the closest available PRS is a third PRS 220. The navigation system may also generate a second route segment 212B between the end location and a PRS of the plurality of first PRSs 202, second plurality of PRSs 214, and third plurality of PRSs 218, such as the closest available PRS. Here the closest available PRS is also a third PRS 218. Alternatively, the navigation system may be configured to generate the first route segment 212A and/or second route segment 212B between the respective start location 208 or end location 210 and the closest available navigation node 201, 214, 218 that lies in the direction of the opposite of the start location 208 or end location 210, as depicted in FIG. 2C. The navigation system may then determine an initial route 222, e.g. a node route, between start location 208 and the end location along the PRSs 202, 214, 218. In some example embodiments, the initial route 222 may include the first route segment 212A and the second route segment 212B. In an example embodiment, the initial route 222 may be the shortest distance between the first route segment 212A and the second route segment 212B along the PRSs 202, 214, 218.

The navigation system may generate a navigable route by optimizing, e.g. smoothing, the initial route 222 (or a portion thereof) between the start location 208 and the end location 210. Since the second navigation nodes 201, 214, 218 are disposed at least a predetermined distance from one or more barriers 200, the route segments of the initial route 222 may be modified up to the predetermined distance associated with the navigation nodes or the segment without changing the safety of the route (e.g., the safety of the depth is already considered in the positioning of pre-generated second navigation nodes).

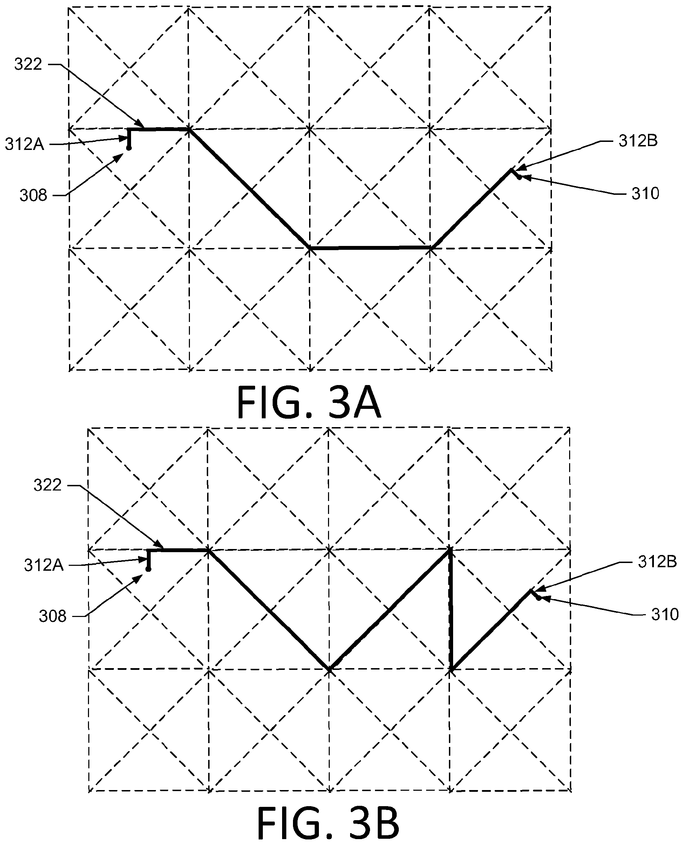

FIGs. 3A-3C illustrate example route optimization according to an example embodiment. In FIGs. 3A and 3B, the navigation system has determined an initial route 322 between a start location 308 and an end location 310 including a first segment 312A and an end segment 312B. The initial route 322 includes a plurality of over shoots or zig-zags.

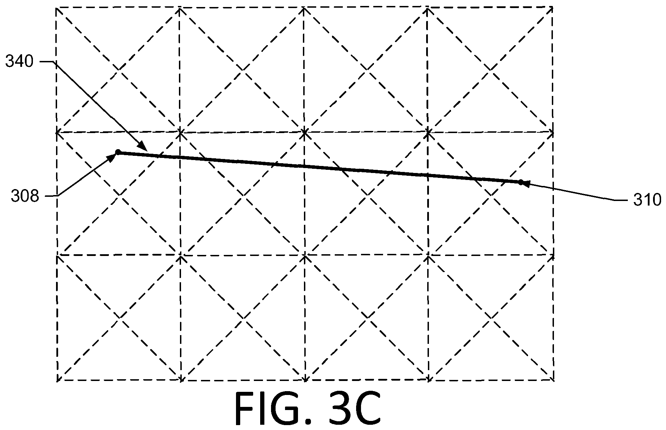

The navigation system may determine one or more optimized route segments 340 between a first node and a last node. For the purposes of optimization of the route, the navigation system may consider the start location 308 and end location 310 navigation nodes. The first node may be disposed on a first segment of the initial route 322 and the last node may be disposed on a second segment of the initial route 322 that is different from the first segment. In FIG. 3C, the navigation system has determined one straight line optimized route segment 340 between the start location 308 and the end location 310. In embodiments in which optimized route segment 340 may diverge from the initial route 322 by greater than the predetermined distance from a barrier associated with the navigation node 201, 214, 218, the navigation system may determine a plurality of optimized route segments that are within the predetermined distance from the barrier associated with the initial route 322.

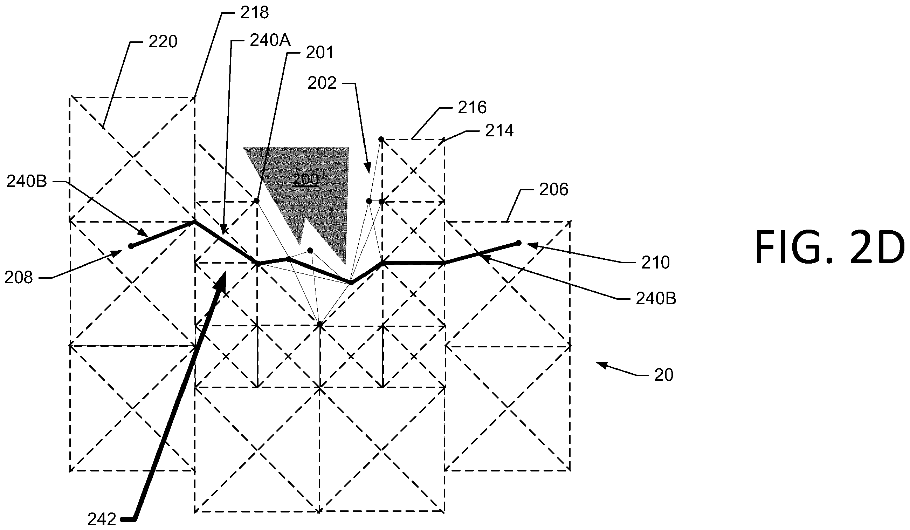

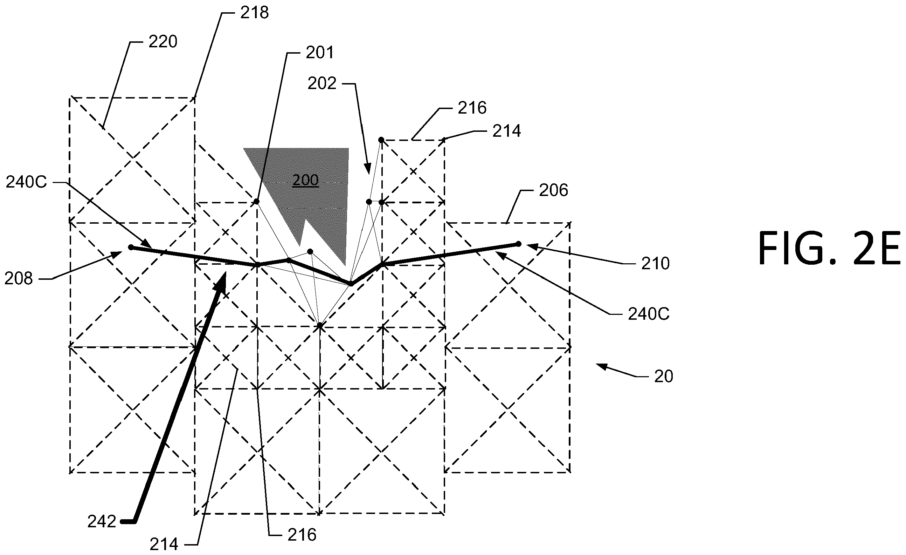

FIGs. 2D-E illustrate another example route optimization process. In the depicted embodiment of FIG. 2D, the navigation system has generated a navigable route 242 by determining a first optimized route segment 240A and replacing two portions of the initial route 222 in the second plurality of navigation nodes 214. Additionally, the navigation system has determined two second optimized route segments 240B and replaced portions of the initial route 222 in the plurality of third navigation nodes 218. In some example embodiments, determining an optimized route segment 240 may be performed across different groups or tiers of navigation nodes, for example across the second plurality of navigation nodes 214 and the third plurality of navigation nodes 218. As depicted in FIG. 2E, the navigation system has generated a navigable route 242 by determining two third optimized route segments 240C that cross both the second plurality of navigation nodes 214 and third plurality of navigation nodes 218. In an instance in which the optimized route segment 240 crosses navigation node groups, e.g. pluralities of navigation nodes 201, 214, 218 that have different minimum distance of their associated threshold distances or ranges from the barrier 200, the difference between the optimized route segment 240 and the initial route 222 may be limited by the minimum distance from the barrier 200 for each navigation node group 201, 214, 218 that the optimized route segment 240 passes through, as discussed above with regard to FIG. 3C.

In some examples, additional parameters may be used to determine which navigation nodes 201, 214, 218 and/or PRSs 202, 216, 220 are selected for generating the initial route or optimizing the initial route to generate navigable route. For example, a user may identify one or more parameters to remain close to, such as a depth band, distance from shore, commonly used paths, or the like. Additionally or alternatively, the user may identify one or more parameters to avoid, such as weather, shallow or deep depths, shipping lanes, commonly used paths, or the like. The navigation system may apply a weight to the navigation nodes, 201, 214, and 218 and/or PRSs 202, 216, 220 based on one or more parameters. For example, the navigation server 403 may apply a higher weight to navigation nodes 201, 214, and 218 and/or PRSs 202, 216, 220 that meet, or are closer to, the desired parameter and apply a lower weight to navigation nodes that do not comply with, or are further from, the desired parameter. The navigation system may then generate the initial route or optimize the initial route based on a path along the PRSs 202, 216, and 220 that utilizes navigation nodes 201, 214, 218 and/or PRSs 202, 216, 220 that have the highest compliance weights.

Although discussed in the context of a two dimensional chart above, in some example embodiments, the navigation chart 20 may be a three dimensional chart and the initial route 222 and navigable route 242 may be generated in three dimensions. For example, the three dimensional navigation chart may include a nautical chart for submerged water operations, an aeronautical or aerospace chart for fight operations, or the like. In such a situation, each of the navigation nodes may include a three dimensional coordinate value.

Once the navigation system generates the navigable route 242, the navigation system may transmit the navigable route 242 to the marine electronics device 405 (or provide it depending on where the processing is being done). The marine electronics device 405 may receive the navigable route 242 and cause the navigable route, or a portion thereof, to be displayed on a user interface.

The navigable route 242 may be followed by manual maneuvering of the vehicle by the user. Additionally or alternatively, the navigable route 242 may be used as an input to an autopilot system 450 (e.g., shown in FIG. 5). The autopilot 450 may be configured to operate a maneuvering system 455 (FIG. 5) automatically, e.g. without user interaction, causing a vehicle, such as a watercraft to travel along the navigable route 242. The autopilot 450 may generate instructions based on a current vehicle position, the navigable route 242, or the like to operate the maneuvering system 455.

The navigation chart with tiered navigation nodes and PRSs enables a route across an open environment to be generated quickly. In some instances, a navigation server or marine electronics device, utilizing the described navigation chart and route generation process, may be able to calculate a navigable route 100-200 times faster than standard navigation solutions. Since each tier of navigation node groups is associated with a minimum predetermined distance from a barrier, the route can be optimized or smoothed to remove overshoots and zig-zags while still rendering a safe and efficient route in a significantly shorter period than traditional methods, all while using significantly less computing power.

### Example System Architecture

FIG. 4 illustrates a block diagram of a navigation data system 400. The navigation data system 400 may include one or more navigation devices, such as marine electronics devices 405, a navigation server device 403, and a network 402. In this regard, multiple marine electronic devices 405 may utilize a navigation server device 403 for generating charts and routes in an efficient manner, such as described herein. Alternatively, the marine electronic devices 405 may, in some embodiments, be configured to perform various embodiments described herein without communicating to the remote server (e.g., the chart generation, route generation, and/or route optimization may be performed on the marine electronics device). Example marine electronics devices 405 are described in further detail in FIG. 5 below.

The marine electronics device 405 may communicate the sonar data, location data, and/or condition parameter data via wired or wireless communication to a different marine electronics device 405 and/or a navigation server 403 either directly or via the network 402. An example network 402 is described in further detail in FIG. 5 below.

The navigation server 403 may include processing circuitry 407, such as a processor and memory (which may be similar to processing circuitry 407' described herein with respect to example marine electronic devices 405). The processing circuitry 407 may be in communication with one or more navigation databases 408. The navigation database 408 may include one or more non-transitory storage media configured to store one or more navigation charts 100. The processing circuitry 407 of the navigation server 403 (or marine electronics device 405) may be configured to retrieve a navigation chart and generate a navigable route 242 based on a start location 208 and end location 210 received from one or more of the marine electronics devices 405, as discussed above.

FIG. 5 shows a block diagram of an example navigation system 400 capable for use with several embodiments of the present invention. As shown, the navigation system 400 may include a number of different modules or components, each of which may comprise any device or means embodied in either hardware, software, or a combination of hardware and software configured to perform one or more corresponding functions. For example, the navigation system 400 may include an autopilot 450, a maneuvering system 455, and a marine electronics device 405. Although some of the shown components are often used in the marine context, as detailed herein, embodiments of the present invention are not meant to be limited to the marine context as other environments and corresponding components for use therein are also contemplated.

The navigation system 400 may also include one or more communications modules configured to communicate with one another in any of a number of different manners including, for example, via a network. In this regard, the communications module may include any of a number of different communication backbones or frameworks including, for example, Ethernet, the NMEA 2000 framework, GPS, cellular, WiFi, or other suitable networks. The network may also support other data sources, including GPS, autopilot, engine data, compass, radar, etc. Numerous other peripheral devices such as one or more wired or wireless multi-function displays (e.g. a marine electronics device 405) may be included in the navigation system 400.

The marine electronics device 405 may include a processor 410, a memory 420, a user interface 435, a display 440, one or more sensors (e.g. position sensor 445, orientation sensor (not shown), etc.), and a communication interface 430.

The processor 410 and memory 420 may form processing circuitry 407'. The processor 410 may be any means configured to execute various programmed operations or instructions stored in a memory device such as a device or circuitry operating in accordance with software or otherwise embodied in hardware or a combination of hardware and software (e.g. a processor operating under software control or the processor embodied as an application specific integrated circuit (ASIC) or field programmable gate array (FPGA) specifically configured to perform the operations described herein, or a combination thereof) thereby configuring the device or circuitry to perform the corresponding functions of the processor 410 as described herein. In this regard, the processor 410 may be configured to analyze electrical signals communicated thereto to provide route data for navigation of a vehicle, such as a watercraft. For example, the processor 410 may be configured to receive route data and user input associated with the route data to generate or modify a route for display to a user (e.g. on display 440/user interface 435). Additionally or alternatively, the processor 410 may be configured to generate and send route data including instructions to the autopilot 450 to operate the maneuvering system 455 to cause the vehicle to travel along the route.

In some embodiments, the processor 410 may be further configured to implement signal processing or enhancement features to improve the display characteristics or data or images, collect or process additional data, such as time, temperature, GPS information, waypoint designations, or others, or may filter extraneous data to better analyze the collected data. It may further implement notices and alarms, such as those determined or adjusted by a user, to reflect depth, presence of fish, proximity of other vehicles, e.g. watercraft, etc.

The memory 420 may be configured to store instructions, computer program code, marine data, such as sonar data, chart data, location/position data, and other data associated with the navigation system in a non-transitory computer readable medium for use, such as by the processor.

The communication interface 430 may be configured to enable connection to external systems (e.g. an external network 402). In this manner, the marine electronics device 405 may retrieve stored data from a remote, external server via the external network 402 in addition to or as an alternative to the onboard memory 420.

The position sensor 445 may be configured to determine the current position and/or location of the marine electronics device 405. For example, the position sensor 445 may comprise a GPS, bottom contour, inertial navigation system, such as micro-electromechanical sensor (MEMS), a ring laser gyroscope, or the like, or other location detection system.

The display 440 may be configured to display images and may include or otherwise be in communication with a user interface 435 configured to receive an input from a user. The display 440 may be, for example, a conventional LCD (liquid crystal display), a touch screen display, mobile device, or any other suitable display known in the art upon which images may be displayed.

In any of the embodiments, the display 440 may present one or more sets of marine data (or images generated from the one or more sets of data). Such marine data includes chart data, radar data, weather data, location data, position data, orientation data, sonar data, or any other type of information relevant to the watercraft. In some embodiments, the display 440 may be configured to present such marine data simultaneously as one or more layers or in split-screen mode. In some embodiments, a user may select any of the possible combinations of the marine data for display.

In some further embodiments, various sets of data, referred to above, may be superimposed or overlaid onto one another. For example, a route may be applied to (or overlaid onto) a chart (e.g. a map or navigation chart). Additionally or alternatively, depth information, weather information, radar information, sonar information, or any other navigation system inputs may be applied to one another.

The user interface 435 may include, for example, a keyboard, keypad, function keys, mouse, scrolling device, input/output ports, touch screen, or any other mechanism by which a user may interface with the system.

Although the display 440 of FIG. 5 is shown as being directly connected to the processor 410 and within the marine electronics device 405, the display 440 could alternatively be remote from the processor 410 and/or marine electronics device 405. Likewise, in some embodiments, the position sensor 445 and/or user interface 135 could be remote from the marine electronics device 405. Similarly, the autopilot 450 is depicted remote from the marine electronics device 405, but may be directly connected to the processor 410 within the marine electronics device.

The autopilot 450 may include processing circuitry, such as a processor and a memory, configured to operate the maneuvering system 455. The autopilot 450 may be configured to operate the maneuvering system automatically, e.g. without user interaction, causing a vehicle, such as a watercraft to travel along the navigable route 242. The autopilot 450 may generate instructions based on a vehicle position, the navigable route 242, or the like to operate the maneuvering system 455.

The maneuvering system 455 may include one or more propulsion motors, or engines, including but not limited to, outboard motors, inboard motors, trolling motors, main engines, emergency propulsion motors, or the like. Additionally, the maneuvering system 455 may include one or more control surfaces, such as rudders, planes, or the like configured to steer the vehicle.

### Example Flowchart(s) and Operations

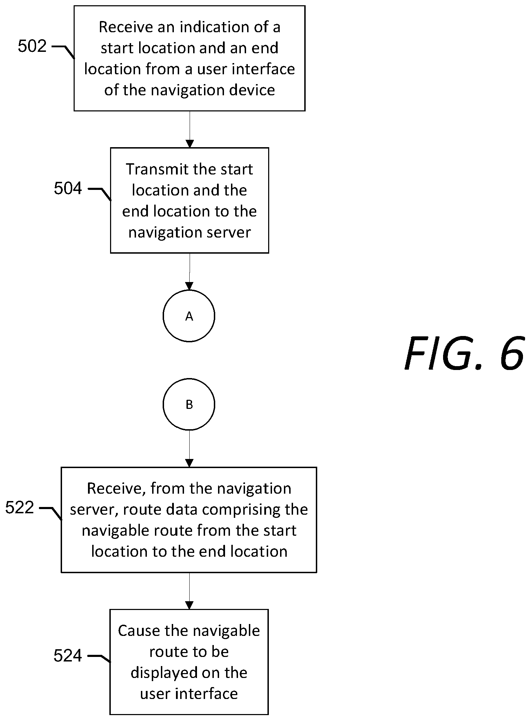

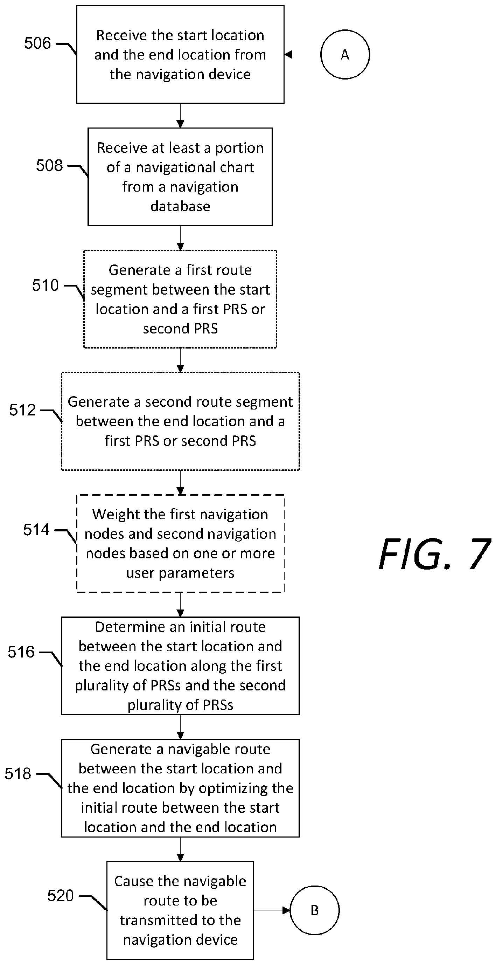

Embodiments of the present invention provide methods, apparatus and computer program products for generating a route for navigation of a vehicle across an open environment. Various examples of the operations performed in accordance with embodiments of the present invention will now be provided with reference to FIGs. 6-9.

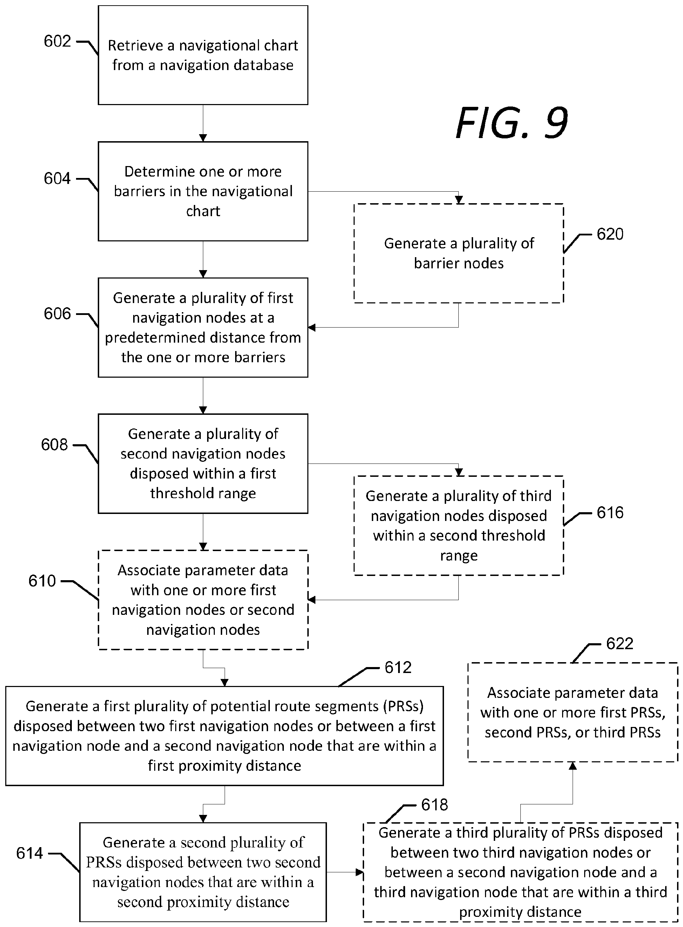

FIGs. 6-8 illustrate flowcharts according to an example method for generating a route for navigation of a vehicle according to an example embodiment. FIG. 9 illustrates a flow chart according to an example method of generating a navigation chart according to an example embodiment. The operations illustrated in and described with respect to FIGs. 6-9 may, for example, be performed by, with the assistance of, and/or under the control of the navigation server 403 and/or marine electronics devices 405 including processing circuitry 407, 407', navigation database 408, the processor 410, memory 420, communication interface 430, user interface 435, position sensor 445, display 440, autopilot 450 and/or maneuvering system 455.

The method of generating a route depicted in FIGs. 6-8 may include receiving an indication of a start location and an end location from a user interface of the navigation device at operation 502, transmitting the start location and the end location to the navigation server at operation 504, and receiving the start location and the end location from the navigation device at operation 506. The method may also include receiving at least a portion of a navigation chart from a navigation database at operation 508, determining an initial route between the start location and the end location along the first plurality of PRSs and the second plurality of PRSs at operation 516, and generating a navigable route between the start location and the end location by optimizing the initial route between the start location and the end location at operation 518. The method may additionally include causing the navigable route to be transmitted to the navigation device at operation 520, receive, from the navigation server, route data comprising the navigable route from the start location to the end location at operation 522, and causing the navigable route to be displayed on the user interface at operation 524.

In some embodiments, the method of generating the route may include additional, optional operations, and/or the operations described above may be modified or augmented. Some examples of modifications, optional operations, and augmentations are described below, as indicated by dashed lines, such as generating a first route segment between the start location and a first PRS or second PRS at operation 510, generating a second route segment between the end location and a first PRS or second PRS at operation 512, and weighting the first navigation nodes and second navigation nodes based on one or more user parameters at operation 514.

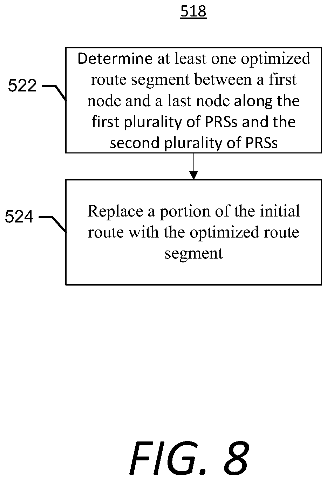

FIG. 8 illustrates a flowchart according to an example method for generating a navigable route between the start location and the end location by optimizing the initial route between the start location and the end location under operation 518. The method may include determining at least one optimized route segment between a first node and a last node along the first plurality of PRSs and the second plurality of PRSs at operation 522 and replacing a portion of the initial route with the optimized route segment at operation 524.

The method of generating a navigation chart depicted in FIG 9 may include retrieving a navigation chart from a navigation database at operation 602, determining one or more barriers in the navigation chart at operation 604, generating a plurality of first navigation nodes at a predetermined distance from the one or more barriers at operation 606, and generating a plurality of second navigation nodes disposed within a first threshold range at operation 608. The method may also include generating a first plurality of potential route segments (PRSs) disposed between two first navigation nodes or between a first navigation node and a second navigation node that are within a first proximity distance at operation 612 and generating a second plurality of PRSs disposed between two second navigation nodes that are within a second proximity distance at operation 614.

In some embodiments, the method of generating a navigation chart may include additional, optional operations, and/or the operations described above may be modified or augmented. Some examples of modifications, optional operations, and augmentations are described below, as indicated by dashed lines, such as, associating parameter data with one or more first navigation nodes or second navigation nodes at operation 610. The method may also include generating a plurality of third navigation nodes disposed within a second threshold range at operation 616 and generating a third plurality of PRSs disposed between two third navigation nodes or between a second navigation node and a third navigation node that are within a third proximity distance at operation 618. The method may also include a plurality of barrier nodes at operation 620 and associating parameter data with one or more first PRSs, second PRSs, or third PRSs at operation 622.

FIGs. 6-9 illustrate flowcharts of a system, method, and computer program product according to an example embodiment. It will be understood that each block of the flowcharts, and combinations of blocks in the flowcharts, may be implemented by various means, such as hardware and/or a computer program product comprising one or more computer-readable mediums having computer readable program instructions stored thereon. For example, one or more of the procedures described herein may be embodied by computer program instructions of a computer program product. In this regard, the computer program product(s) which embody the procedures described herein may be stored by, for example, the memory 408, 420 and executed by, for example, the processing circuitry 407, 407'. As will be appreciated, any such computer program product may be loaded onto a computer or other programmable apparatus (for example, a navigation server 403 and/or a marine electronics device 405) to produce a machine, such that the computer program product including the instructions which execute on the computer or other programmable apparatus creates means for implementing the functions specified in the flowchart block(s). Further, the computer program product may comprise one or more non-transitory computer-readable mediums on which the computer program instructions may be stored such that the one or more computer-readable memories can direct a computer or other programmable device (for example, a navigation server 403 and/or a marine electronics device 405) to cause a series of operations to be performed on the computer or other programmable apparatus to produce a computer-implemented process such that the instructions which execute on the computer or other programmable apparatus implement the functions specified in the flowchart block(s).

## Claims

1. A method of generating a chart for navigation through an open environment, the method comprising:
retrieving a navigation chart from a navigation database;
determining one or more barriers in the navigation chart;
generating a plurality of first navigation nodes at a first predetermined distance from the one or more barriers;
generating a plurality of second navigation nodes disposed within a first threshold distance range, wherein the first threshold distance range includes a minimum distance from the one or more barriers that is greater than the first predetermined distance;
generating a first plurality of potential route segments (PRSs), wherein each of the first plurality of PRSs extend between two first navigation nodes or between a first navigation node and a second navigation node that are within a first proximity distance of each other; and
generating a second plurality of PRSs that each extend between two second navigation nodes that are within a second proximity distance of each other.

2. The method of claim 1 further comprising:
generating a plurality of barrier nodes disposed a predetermined safety distance from the one or more barriers and one or more barrier segments that each extend between two barrier nodes, wherein the one or more barrier segments define the one or more barriers for generation of the first navigation nodes and second navigation nodes.

3. The method of claim 1 further comprising:
generating a plurality of third navigation nodes disposed within a second threshold distance range, wherein the second threshold distance range includes a minimum distance from the one or more barriers that is greater than or equal to a maximum distance from the one or more barriers of the first threshold range; and
generating a third plurality of PRSs that each extend between two third navigation nodes or between a second navigation node and a third navigation node that are within a third proximity distance of each other.

4. The method of claim 1 further comprising:
associating parameter data with at least one of the plurality of first navigation nodes, at least one of the plurality of second navigation nodes, at least one of the first plurality of PRSs, or at least one of the second plurality of PRSs.

5. A navigation system comprising:
a navigation device comprising:
a user interface;
a device processor and a device memory including computer program code configured to, with the device processor, cause the navigation device to:
receive an indication of a start location and an end location based on user input applied to the user interface of the navigation device;
receive at least a portion of a navigation chart from a navigation database, wherein the navigation chart includes both the start location and the end location, wherein the navigation chart comprises:
one or more barriers;
a plurality of first navigation nodes disposed at a first predetermined distance from the one or more barriers;
a plurality of second navigation nodes disposed within a first threshold distance range, wherein the first threshold distance range includes a minimum distance from the one or more barriers that is greater than the first predetermined distance;
a first plurality of potential route segments (PRSs) that each extend between two first navigation nodes or between a first navigation node and a second navigation node that are within a first proximity distance of each other; and
a second plurality of PRSs that each extend between two second navigation nodes that are within a second proximity distance of each other;
determine an initial route between the start location and the end location, wherein the initial route includes at least one of the first plurality of PRSs or at least one of the second plurality of PRSs;
generate a navigable route by optimizing at least a portion of the initial route between the start location and the end location, wherein optimizing at least a portion of the initial route comprises replacing a portion of the initial route corresponding to at least a portion of one of the first plurality of PRSs or one of the second plurality of PRSs with a different route portion; and
cause the generated navigable route to be displayed on the user interface.

6. The navigation system of claim 5, wherein the computer program code is further configured to, with the device processor, cause the navigation device to:
weight the plurality of first navigation nodes, the plurality of second navigation nodes, the first plurality of PRSs, or the second plurality of PRSs based on one or more parameters; and
determine the initial route based on the one or more parameters such that the initial route includes first navigation nodes, second navigation nodes, or PRSs with parameters that satisfy a desired compliance weight.

7. The navigation system of claim 6, wherein the parameters are based on at least one of depth, distance from a barrier, distance from a weather parameter, how often that node or PRS is used, or distance from a traffic lane.

8. The navigation system of claim 5, wherein the navigation chart further comprises:
a plurality of third navigation nodes disposed within a second threshold distance range, wherein the second threshold distance range includes a minimum distance from the one or more barriers that is greater than a maximum distance from the one or more barriers of the first threshold distance range; and
a third plurality of PRSs that each extend between two third navigation nodes or between a second navigation node and a third navigation node that are within a third proximity distance of each other,
wherein determining the initial route includes at least one of the first plurality of PRSs, at least one of the second plurality of PRSs, or at least one of the third plurality of PRSs.

9. The navigation system of claim 5, wherein optimizing the at least a portion of the initial route comprises straightening a portion of the initial route that extends across two or more consecutive PRSs from either the first plurality of PRSs or the second plurality of PRSs.

10. The navigation system of claim 5, wherein the navigation chart comprises a three dimensional navigation chart and the navigable route is generated in three dimensions.

11. The navigation system of claim 5, wherein the navigation chart is a nautical chart or an aerospace chart.

12. The navigation system of claim 5, wherein the first plurality of PRSs comprise route segments with a clear line of sight between consecutive ones of the plurality of first navigation nodes.

## Patentansprüche

1. Verfahren zur Erzeugung einer Tabelle für die Navigation durch eine offene Umgebung, wobei das Verfahren Folgendes umfasst:
Aufrufen einer Navigationstabelle aus einer Navigationsdatenbank;
Bestimmen einer oder mehrerer Barrieren in der Navigationstabelle;
Erzeugen einer Vielzahl von ersten Navigationsknoten in einem ersten vorbestimmten Abstand von einer oder mehreren Barrieren;
Erzeugen einer Vielzahl von zweiten Navigationsknoten, die innerhalb eines ersten Schwellenwertabstandsbereichs angeordnet sind, wobei der erste Schwellenwertabstands-bereich einen Mindestabstand von der einen oder den mehreren Barrieren beinhaltet, der größer als der erste vorbestimmte Abstand ist;
Erzeugen einer ersten Vielzahl von potenziellen Routensegmenten (PRSs), wobei sich jedes der ersten Vielzahl von PRSs zwischen zwei ersten Navigationsknoten oder zwischen einem ersten Navigationsknoten und einem zweiten Navigationsknoten erstreckt, die innerhalb eines ersten Näherungsabstands voneinander liegen; und
Erzeugen einer zweiten Vielzahl von PRSs, die sich zwischen zwei zweiten Navigationsknoten erstrecken, die innerhalb eines zweiten Näherungsabstands voneinander liegen.

2. Verfahren nach Anspruch 1, ferner umfassend:
Erzeugen einer Vielzahl von Barriere-Knoten, die in einem vorbestimmten Sicherheitsabstand von einer oder mehreren Barrieren und einem oder mehreren Barriere-Segmenten, die sich jeweils zwischen zwei Barriere-Knoten erstrecken, angeordnet sind, wobei das eine oder die mehreren Barriere-Segmente die eine oder mehreren Barrieren zur Erzeugung der ersten Navigationsknoten und der zweiten Navigationsknoten definieren.

3. Verfahren nach Anspruch 1, ferner umfassend:
Erzeugen einer Vielzahl von dritten Navigationsknoten, die innerhalb eines zweiten Schwellenwertabstandsbereichs angeordnet sind, wobei der zweite Schwellenwertabstandsbereich einen Mindestabstand von der einen oder den mehreren Barrieren beinhaltet, der größer als oder gleich einem Höchstabstand von der einen oder den mehreren Barrieren des ersten Schwellenwertbereichs ist; und
Erzeugen einer dritten Vielzahl von PRSs, die sich jeweils zwischen zwei dritten Navigationsknoten oder zwischen einem zweiten Navigationsknoten und einem dritten Navigationsknoten erstrecken, die innerhalb eines dritten Näherungsabstands zueinander liegen.

4. Verfahren nach Anspruch 1, ferner umfassend:
Zuordnen von Parameterdaten mit mindestens einem der Vielzahl von ersten Navigationsknoten, mindestens einem der Vielzahl von zweiten Navigationsknoten, mindestens einem der ersten Vielzahl von PRSs oder mindestens einem der zweiten Vielzahl von PRSs.

5. Navigationssystem, umfassend:
eine Navigationsvorrichtung, umfassend:
eine Benutzerschnittstelle;
einen Vorrichtungsprozessor und einen Vorrichtungsspeicher, der einen Computerprogrammcode beinhaltet, der dazu konfiguriert ist, herbeizuführen, dass die Navigationsvorrichtung mit dem Vorrichtungsprozessor Folgendes durchführt:
Empfangen einer Anzeige einer Startposition und einer Endposition basierend auf einer Benutzereingabe, die auf die Benutzerschnittstelle der Navigationsvorrichtung angewendet wird;
Empfangen von mindestens einem Abschnitt einer Navigationstabelle von einer Navigationsdatenbank, wobei die Navigationstabelle sowohl die Startposition als auch die Endposition beinhaltet, wobei die Navigationstabelle Folgendes umfasst:
eine oder mehrere Barrieren;
eine Vielzahl von ersten Navigationsknoten, die in einem ersten vorbestimmten Abstand von der einen oder den mehreren Barrieren angeordnet sind;
eine Vielzahl von zweiten Navigationsknoten, die innerhalb eines ersten Schwellenwertabstandsbereichs angeordnet sind, wobei der erste Schwellenwertabstandsbereich einen Mindestabstand von der einen oder den mehreren Barrieren beinhaltet, der größer als der erste vorbestimmte Abstand ist;
eine erste Vielzahl von potenziellen Routensegmenten (PRSs), die sich jeweils zwischen zwei ersten Navigationsknoten oder zwischen einem ersten Navigationsknoten und einem zweiten Navigationsknoten erstrecken, die innerhalb eines ersten Näherungsabstands voneinander liegen; und
eine zweite Vielzahl von PRSs, die sich jeweils zwischen zwei zweiten Navigationsknoten erstrecken, die innerhalb eines zweiten Näherungsabstands voneinander liegen;
Bestimmen einer ursprünglichen Route zwischen der Startposition und der Endposition, wobei die ursprüngliche Route mindestens eines der ersten Vielzahl von PRSs oder mindestens eines der zweiten Vielzahl von PRSs beinhaltet;
Erzeugen einer navigierbaren Route durch Optimierung mindestens eines Abschnitts der ursprünglichen Route zwischen der Startposition und der Endposition, wobei ein Optimieren von mindestens einem Abschnitt der ursprünglichen Route das Austauschen eines Abschnitts der ursprünglichen Route entsprechend mindestens einem Abschnitt von einem der ersten Vielzahl von PRSs oder von einem der zweiten Vielzahl von PRSs durch einen anderen Routenabschnitt umfasst; und
Herbeiführen, dass die erzeugte navigierbare Route in der Benutzer-schnittstelle angezeigt wird.

6. Navigationssystem nach Anspruch 5, wobei der Computerprogrammcode ferner dazu konfiguriert ist, herbeizuführen, dass die Navigationsvorrichtung mit dem Vorrichtungs-prozessor Folgendes durchführt:
Gewichten der Vielzahl von ersten Navigationsknoten, der Vielzahl von zweiten Navigationsknoten, der ersten Vielzahl von PRSs oder der zweiten Vielzahl von PRSs basierend auf einem oder mehreren Parametern; und
Bestimmen der ursprünglichen Route basierend auf dem einen oder den mehreren Parametern, sodass die ursprüngliche Route erste Navigationsknoten, zweite Navigations-knoten oder PRSs mit Parametern beinhaltet, die einer gewünschten Entsprechungs-gewichtung genügen.

7. Navigationssystem nach Anspruch 6, wobei die Parameter auf mindestens einem von Tiefe, Abstand von einer Barriere, Abstand von einem Wetterparameter, Verwendungshäufigkeit des Knotens oder PRS oder Abstand von einer Fahrspur basiert sind.

8. Navigationssystem nach Anspruch 5, wobei die Navigationstabelle ferner Folgendes umfasst:
eine Vielzahl von dritten Navigationsknoten, die innerhalb eines zweiten Schwellenwertabstandsbereichs angeordnet sind, wobei der zweite Schwellenwertabstands-bereich einen Mindestabstand von der einen oder den mehreren Barrieren beinhaltet, der größer als der Höchstabstand von der einen oder den mehreren Barrieren des ersten Schwellenwertabstandsbereichs ist; und
eine dritte Vielzahl von PRSs, die sich jeweils zwischen zwei dritten Navigations-knoten oder zwischen einem zweiten Navigationsknoten und einem dritten Navigations-knoten erstrecken, die innerhalb eines dritten Näherungsabstands voneinander liegen,
wobei ein Bestimmen der ursprünglichen Route mindestens eines der ersten Vielzahl von PRSs, mindestens eines der zweiten Vielzahl von PRSs oder mindestens eines der dritten Vielzahl von PRSs beinhaltet.

9. Navigationssystem nach Anspruch 5, wobei ein Optimieren des mindestens einen Abschnitts der ursprünglichen Route das Begradigen eines Abschnitts der ursprünglichen Route umfasst, die sich über zwei oder mehr aufeinanderfolgende PRSs von entweder der ersten Vielzahl von PRSs oder der zweiten Vielzahl von PRSs erstreckt.

10. Navigationssystem nach Anspruch 5, wobei die Navigationstabelle eine dreidimensionale Navigationstabelle umfasst und die navigierbare Route in drei Dimensionen erzeugt wird.

11. Navigationssystem nach Anspruch 5, wobei die Navigationstabelle eine Seekarte oder eine Luft- und Raumfahrtkarte ist.

12. Navigationssystem nach Anspruch 5, wobei die erste Vielzahl von PRSs Routensegmente mit einer freien Sicht zwischen aufeinanderfolgenden der Vielzahl von ersten Navigationsknoten umfasst.

## Revendications

1. Procédé de génération d'une carte pour la navigation dans un environnement ouvert, le procédé comprenant :
la récupération d'une carte de navigation à partir d'une base de données de navigation ;
la détermination d'une ou de plusieurs barrières dans la carte de navigation ;
la génération d'une pluralité de premiers nœuds de navigation à une première distance prédéterminée des une ou plusieurs barrières ;
la génération d'une pluralité de deuxièmes nœuds de navigation disposés à l'intérieur d'une première plage de distances seuils, dans lequel la première plage de distances seuils comprend une distance minimale par rapport aux une ou plusieurs barrières qui est supérieure à la première distance prédéterminée ;
la génération d'une première pluralité de segments d'itinéraire potentiels (PRS), dans lequel chacun de la première pluralité de PRS s'étend entre deux premiers nœuds de navigation ou entre un premier nœud de navigation et un deuxième nœud de navigation qui sont à une première distance de proximité l'un de l'autre ; et
la génération d'une deuxième pluralité de PRS qui s'étendent chacun entre deux deuxièmes nœuds de navigation qui sont à une deuxième distance de proximité l'un de l'autre.

2. Procédé selon la revendication 1, comprenant en outre :
la génération d'une pluralité de nœuds de barrière disposés à une distance de sécurité prédéterminée des une ou plusieurs barrières et d'un ou de plusieurs segments de barrière qui s'étendent chacun entre deux nœuds de barrière, dans lequel les un ou plusieurs segments de barrière définissent les une ou plusieurs barrières pour la génération des premiers nœuds de navigation et des deuxièmes nœuds de navigation.

3. Procédé selon la revendication 1, comprenant en outre :
la génération d'une pluralité de troisièmes nœuds de navigation disposés à l'intérieur d'une deuxième plage de distances seuils, dans lequel la deuxième plage de distances seuils comprend une distance minimale par rapport aux une ou plusieurs barrières qui est supérieure ou égale à une distance maximale par rapport aux une ou plusieurs barrières de la première plage de seuils ; et
la génération d'une troisième pluralité de PRS qui s'étendent chacun entre deux troisièmes nœuds de navigation ou entre un deuxième nœud de navigation et un troisième nœud de navigation qui sont à une troisième distance de proximité l'un de l'autre.

4. Procédé selon la revendication 1, comprenant en outre :
l'association de données de paramètres à au moins l'un de la pluralité de premiers nœuds de navigation, au moins l'un de la pluralité de deuxièmes nœuds de navigation, au moins l'un de la première pluralité de PRS, ou au moins l'un de la deuxième pluralité de PRS.

5. Système de navigation comprenant :
un dispositif de navigation comprenant :
une interface utilisateur ;
un processeur de dispositif et une mémoire de dispositif comprenant un code de programme informatique conçu pour, avec le processeur de dispositif, amener le dispositif de navigation à :
recevoir une indication d'un emplacement de départ et d'un emplacement final sur la base d'une entrée utilisateur appliquée à l'interface utilisateur du dispositif de navigation ;
recevoir au moins une partie d'une carte de navigation à partir d'une base de données de navigation, dans lequel la carte de navigation comprend à la fois l'emplacement de départ et l'emplacement final, dans lequel la carte de navigation comprend :
une ou plusieurs barrières ;
une pluralité de premiers nœuds de navigation disposés à une première distance prédéterminée des une ou plusieurs barrières ;
une pluralité de deuxièmes nœuds de navigation disposés à l'intérieur d'une première plage de distances seuils, dans lequel la première plage de distances seuils comprend une distance minimale par rapport aux une ou plusieurs barrières qui est supérieure à la première distance prédéterminée ;
une première pluralité de segments d'itinéraire potentiels (PRS) qui s'étendent chacun entre deux premiers nœuds de navigation ou entre un premier nœud de navigation et un deuxième nœud de navigation qui sont à une première distance de proximité l'un de l'autre ; et
une deuxième pluralité de PRS qui s'étendent chacun entre deux deuxièmes nœuds de navigation qui sont à une deuxième distance de proximité l'un de l'autre ;
déterminer un itinéraire initial entre l'emplacement de départ et l'emplacement final, dans lequel l'itinéraire initial comprend au moins l'un de la première pluralité de PRS ou au moins l'un de la deuxième pluralité de PRS ;
générer un itinéraire navigable en optimisant au moins une partie de l'itinéraire initial entre l'emplacement de départ et l'emplacement final, dans lequel l'optimisation d'au moins une partie de l'itinéraire initial comprend le remplacement d'une partie de l'itinéraire initial correspondant à au moins une partie de l'un de la première pluralité de PRS ou de l'un de la deuxième pluralité de PRS par une partie d'itinéraire différente ; et
amener l'itinéraire navigable généré à être affiché sur l'interface utilisateur.

6. Système de navigation selon la revendication 5, dans lequel le code de programme informatique est en outre conçu pour, avec le processeur de dispositif, amener le dispositif de navigation à :
pondérer la pluralité de premiers nœuds de navigation, la pluralité de deuxièmes nœuds de navigation, la première pluralité de PRS, ou la deuxième pluralité de PRS sur la base d'un ou de plusieurs paramètres ; et
déterminer l'itinéraire initial sur la base des un ou plusieurs paramètres de telle sorte que l'itinéraire initial comprenne des premiers nœuds de navigation, des deuxièmes nœuds de navigation, ou des PRS avec des paramètres qui satisfont à un poids de conformité souhaité.

7. Système de navigation selon la revendication 6, dans lequel les paramètres sont basés sur au moins l'un parmi une profondeur, une distance par rapport à une barrière, une distance par rapport à un paramètre météorologique, une fréquence à laquelle ce nœud ou PRS est utilisé, ou une distance par rapport à une voie de circulation.

8. Système de navigation selon la revendication 5, dans lequel la carte de navigation comprend en outre :
une pluralité de troisièmes nœuds de navigation disposés à l'intérieur d'une deuxième plage de distances seuils, dans lequel la deuxième plage de distances seuils comprend une distance minimale par rapport aux une ou plusieurs barrières qui est supérieure à une distance maximale par rapport aux une ou plusieurs barrières de la première plage de distances seuils ; et
une troisième pluralité de PRS qui s'étendent chacun entre deux troisièmes nœuds de navigation ou entre un deuxième nœud de navigation et un troisième nœud de navigation qui sont à une troisième distance de proximité l'un de l'autre,
dans lequel la détermination de l'itinéraire initial comprend au moins l'un de la première pluralité de PRS, au moins l'un de la deuxième pluralité de PRS, ou au moins l'un de la troisième pluralité de PRS.

9. Système de navigation selon la revendication 5, dans lequel l'optimisation de l'au moins une partie de l'itinéraire initial comprend le redressement d'une partie de l'itinéraire initial qui s'étend sur deux PRS consécutifs ou plus à partir de la première pluralité de PRS ou de la deuxième pluralité de PRS.

10. Système de navigation selon la revendication 5, dans lequel la carte de navigation comprend une carte de navigation en trois dimensions et l'itinéraire navigable est généré en trois dimensions.

11. Système de navigation selon la revendication 5, dans lequel la carte de navigation est une carte marine ou une carte aérospatiale.

12. Système de navigation selon la revendication 5, dans lequel la première pluralité de PRS comprend des segments d'itinéraire avec une ligne de vue dégagée entre ceux consécutifs de la pluralité de premiers nœuds de navigation.
